# EUROPEAN PATENT SPECIFICATION

(11) **EP 2 843 596 B1**
(45) Date of publication and mention of the grant of the patent: **05.04.2017**
(21) Application number: 14187078.2
(22) Date of filing: 11.02.2010
(51) Int. Cl.: G06K 19/077, H01Q 1/22, H01Q 1/44, H01Q 13/10

(54) **Ruggedized radio frequency identification tag**
Robustes Hochfrequenzidentifizierungsetikett
Étiquette d'identification de fréquence radio renforcée

(43) Date of publication of application: 04.03.2015
(62) Divisional of application: 10727191.8
(73) Proprietor: Soundcraft, Inc., Chatsworth, CA 91311-6112 (US)
(72) Inventor: Casden, Martin S., Chatsworth, CA 91311-6112 (US)
(74) Representative: Viering, Jentschura & Partner mbB Patent- und Rechtsanwälte

(56) References cited:
- EP-A1- 1 308 883
- US-A- 5 986 562
- US-A1- 2009 273 446

## Description

### Background of the Invention

### Field of the Invention

This invention pertains to the field of radio frequency identification (RFID) devices and more particularly concerns a RFID transponder tag readable by an RFID reader device. The tag is contained in and electrically connected to a mechanically rugged and electrically conductive tag housing shaped and configured to also define a radio frequency antenna for the transponder tag.

### State of the Prior Art

RFID tags are devices used as identification tokens or keys to actuate RFID readers, and generally consist of a radio frequency transponder module connected to a radio frequency antenna. The antenna may be a wire coil or may consist of one or more printed circuit loops. Typically, the transponder module and antenna are encapsulated in plastic for durability, such as in a plastic card. Existing plastic encapsulated RFID tags, while durable for use in operating doorways, elevators and garage gates in normal office, industrial and residential applications, are not sufficiently rugged for certain applications where such tags may be subject to a much greater degree of abuse, impact and mechanical wear, for example, in military applications such as soldier's personal tags worn on his or her person. A need exists for more robust RFID tags better suited for rugged environments.

From the US patent application published under the publication number US 2009/273446 A1 a RFID tag according to the pre-characterizing part of claim 1 is known.

Further, from the European patent application published under the publication number EP 1308883 A1 a slotted RFID tag housing is known.

It is an object of the invention to provide an RFID tag that is robust and suited for rugged environments, particularly the RFID's antenna.

This and other objects are achieved by the features in the characterizing part of claim 1 in combination with the features in the pre-characterizing part of claim 1. Advantageous further embodiments are claimed in the dependent claims 2 - 13.

A ruggedized RFID tag is provided having a metal tag housing which is slit or slotted to define a radio frequency antenna, such as a half turn antenna, and has a RFID transponder circuit in the tag housing operatively connected with the antenna. An antenna matching circuit may be provided for operatively interconnecting the
transponder circuit with the antenna. The tag housing may be of steel, aluminum or other mechanically strong and at least partially electrically conductive material, including metals, metallic alloys or nonmetallic materials or combination of materials, metals and nonmetallic materials.

In one embodiment the metal tag housing comprises two housing portions joined mechanically and electrically to each other and containing therebetween the RFID transponder. For example, the metal housing portions can be both slotted to define the antenna, and the metal housing portions can be mechanically and electrically joined by crimping together along the edges of the housing portions. Electrically insulating material such as epoxy may be provided in each slot for closing the slot against entry of foreign matter into the tag housing.

### Brief Description of the Drawings

Fig. 1 is a typical electrical block diagram of the ruggedized RFID tag according to this invention;
Fig. 2 is an exploded perspective view showing the main components of a typical ruggedized RFID tag according to this invention;
Fig. 3 is a close up view of the RFID transponder module of the tag of Fig. 2;
Fig. 4 is a perspective view of the assembled tag of Fig. 2 showing how the lip of the bottom housing portion is crimped over the top housing portion and also indicating the location of the RFID transponder circuit in phantom lining; and
Fig. 5 is a cross section taken along line 5-5 in Fig. 4 showing how the RFID module is captive between the housing portions and the elastomeric connectors contact the inside surface of the top housing portion for interconnecting the module to the antenna defined by the housing.

### Detailed Description of the Preferred Embodiments

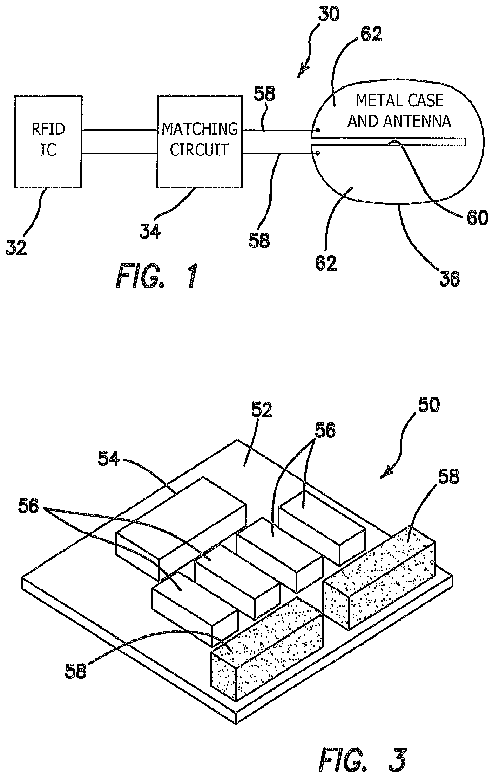

The ruggedized RFID tag 30 according to this invention is illustrated in Figs. 1 through 5 of the drawings. Fig. 1 shows in block diagram form the electrical circuit of RFID tag 30, including an RFID transponder circuit 32 connected via an antenna matching circuit 34 and antenna connectors 58 to a radio frequency antenna 36.

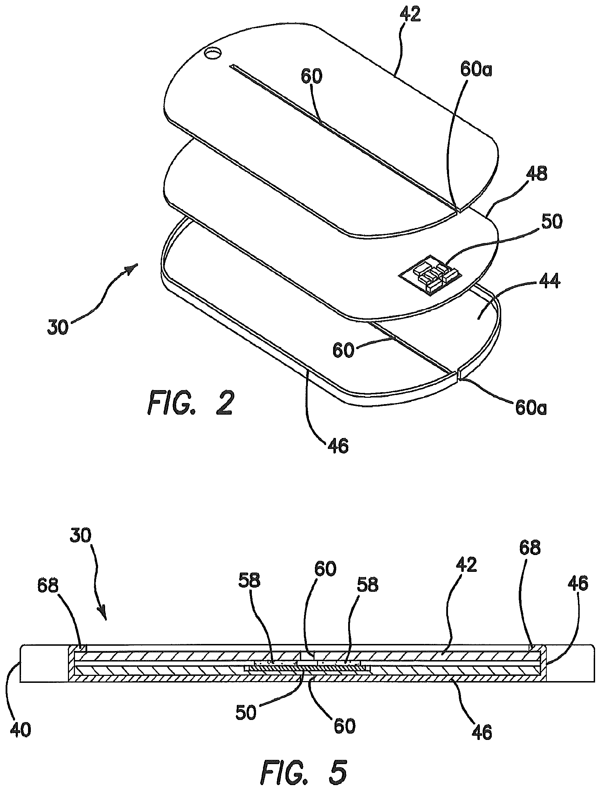

Fig. 2 shows in exploded relationship the main physical components of ruggedized RFID tag 30. Tag 30 has a tag housing 40 comprised of two housing portions, a top housing portion 42 and a bottom housing portion 44. The two housing portions 42, 44 in the illustrated embodiment are flat plates, one of which has a raised lip 46 extending about the edge of the plate.

An electrically insulating spacer plate 48 is contained between housing portions 42, 44 and within raised lip 46. Spacer plate 48 carries an RFID transponder module 50 which includes the RFID transponder circuit 32 and the antenna matching circuit 34.

In the presently preferred embodiment both top and bottom housing portions 42, 44 are metallic, for example, of steel, aluminum or any other mechanically strong metal or alloy with sufficient electrical conductivity for purposes of this application. The insulating spacer 48 may be of ABS (Acrylonitrile Butadiene Styrene), PVC (Polyvinyl chloride), nylon, ceramic or any electrically and mechanically stable electrical insulator.

As seen in Fig. 3, transponder module 50 has a substrate 52 on which are mounted the electrical and electronic components which together make up the RFID transponder circuit 32 and antenna matching circuit 34. The transponder circuit 32 is an integrated circuit die 54, while antenna matching circuit 34 is comprised of matching circuit components 56, which typically are surface mount capacitors. The output of antenna matching circuit 34 terminates in connections to a pair of elastomeric connectors 58 mounted on substrate 52. These connections may be by way of conductive traces on substrate 52 or by other suitable means.

Each of the top and bottom housing portions 42, 44 are slit to define a radio frequency antenna 36. In the illustrated embodiment, housing portions are slit by means of a center slot 60 extending partially along a longitudinal dimension of the housing portions and open at one end of each housing portion to divide and define two equal lobes 62 on each housing portion 42, 44 to form antenna 36.

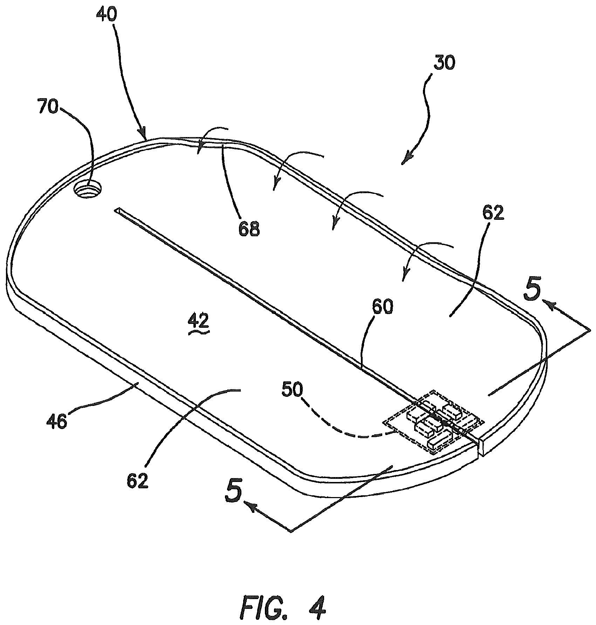

In an assembled condition of tag 30 depicted in Figs. 4 and 5 the top and bottom housing portions 42, 44 are joined electrically and mechanically to each other, for example, by mechanically crimping the raised lip 46 of the bottom housing portion over the top housing portion 44. The crimp 68 suggested by the arrows in Fig. 4 establishes an electrical connection extending along the crimped together edges of the housing portions 42, 44 and also makes a strong mechanical joint between the two housing portions. Other methods of mechanically joining and electrically connecting the housing portions 42, 44 , such as welding or soldering, among others, may also be used. The top and bottom housing portions 42, 44 are joined with the corresponding slots 60 overlaid in register with each other, that is, with the open ends 60a of slots 60 located on the same end of the tag housing 40, so that electrically the stacked slots 60 extend through the thickness of the assembled tag housing, and the two electrically connected slotted housing portions 42, 44, i.e. the tag housing, acts as a single radio frequency antenna 36. The slots 60 define a half turn radio frequency antenna 36 which is driven via the antenna matching circuit 34, so that the tag housing 40 also becomes the antenna 36 for the RFID transponder 32 contained in the housing. The tag housing 40 thus serves the dual function of mechanically containing and protecting the RFID transponder 32 and of receiving and radiating RFID radio frequency signals between RFID transponder 32 and a suitable RFID tag reader unit.

In an assembled condition of the tag 30, the spacer plate 48 lies on the bottom housing portion 42 within raised lip 46. The substrate 52 is affixed to the spacer plate 40 by suitable means, such as an adhesive. The top housing portion 42 lies over the spacer plate 48 and within raised lip 46 of the bottom housing portion 44. The two housing portions 42, 44 are assembled with the spacer 48 in-between to form a three layer stack, as best seen in Fig. 5. In the assembled condition the inside surface 64 of top housing portion 44 presses down on the two elastomeric connectors 50, so that each connector 50 establishes an electrical connection between one output side of the antenna matching circuit 34 and a corresponding lobe 62 of the antenna defined by top housing portion 42. The elastomeric connectors 50 may be commercially available silicone elastomeric connectors of a type well known in the field.

In the assembled tag 30 it will be desirable in most applications to fill the slots 60 with a nonconductive but durable material, such as epoxy, to seal the interior of the tag 30 against entry of moisture and foreign matter. Alternatively, raised ridges may be formed integrally with the spacer plate 48 such that the raised ridges align with and fill the slots when the top and bottom housing portions 42, 44 are stacked with the spacer plate 48 between them, thereby closing the slots against entry of foreign matter. In one form of the invention a hole 70 is provided through the housing 40 for passing a neck chain, bracelet, key chain or the like, if the tag 30 is to be hung and worn on the person of the tag user.

In one embodiment, the dimensions of tag housing 40 may be 0.5 inch wide or wider, 1.0 inch long or longer, and 0.1 inch thick. In other embodiments, the tag housing may be between 0.3 inches and 2 inches in width, between 0.5 inch and 3 inches in length, and between 0.05 and 0.25 inch in thickness. Still larger tag dimensions may be found suitable for certain applications, even double or triple the preceding dimensions, for example.

The ruggedized tag 30 of this invention is suitable for RFID modules and circuits operating at the RFID radio frequency of 13.56 MHz. However, it may be adapted for operation at other frequencies as well, with appropriate adjustment of the antenna matching circuit 34 and configuration of antenna 36. The design and construction of antenna matching circuit 34 is well understood in the RFID field and need not be explained in greater detail here.

The housing portions 42, 44 may be of materials other than metal provided at least a part of one housing portion is electrically conductive so as to define a radio frequency antenna operative at the relevant RFID frequency. For example, it is contemplated that bottom housing portion 44 could be of a mechanically strong but non conductive material, such as a hard ceramic, and only the top housing portion is metallic and slit, slotted or otherwise shaped for defining an antenna. Antenna 36 may take forms other than the half turn antenna shown in the drawings, and by appropriate slitting, slotting, cutting or shaping of the tag housing an antenna having one or two turns or a spiral antenna could be defined in, on or by tag housing 40. It is also contemplated that both housing portions could be of a nonconductive but mechanically rugged material such as a hard ceramic, and a metallic or otherwise conductive layer deposited or applied to the interior and/or exterior of one or both housing portions so as to define antenna 36.

Other methods and means for making the electrical connection between the radio frequency transponder output and the antenna may be used in addition to or in lieu of silicone elastomeric connectors. For example, conductive epoxy may be used for this purpose, among other possibilities.

In the illustrated embodiment the housing portions 42, 44 are flat or planar with the exception of the lip 46 along the edge of housing portion 44, and generally rectangular with rounded corners, resulting in a thin flat tag assembly which can be suspended, for example on a neck chain and worn comfortably. However, the ruggedized tag 30 of this invention is not limited to the particular shape and configuration of housing portions 42, 44 shown in the drawings.

While particular embodiments of the invention have been described and illustrated for purposes of clarity and example, it will be understood that many changes, substitutions and modifications will be apparent to those having only ordinary skill in the art without thereby departing from the scope of the invention as defined by the following claims.

## Claims

1. A RFID tag (30) comprising a tag housing (40) at least partially of electrically conductive material shaped and configured to define a radio frequency antenna (36) integral with said housing; and
a RFID transponder circuit (32, 50) contained in said tag housing operatively interconnected with said antenna;
**characterized in that**
said tag housing (40) comprises at least one electrically conductive housing portion (42, 44) slotted for defining said antenna (36).

2. The RFID tag of Claim 1, **characterized in that** said tag housing (40) comprises top and bottom housing portions (42, 44) joined electrically and mechanically to each other, and a slot (60) cut in each of said portions for defining said radio frequency antenna (36).

3. The RFID tag of any of the preceding claims, **characterized in that** said tag housing (40) has two housing portions (42, 44) at least one of which is electrically conductive and shaped for defining said antenna (36) and an electrically insulating spacer (48) contained between said housing portions, said RFID transponder (32, 50) being supported on said spacer.

4. The RFID tag of any of the preceding claims, **characterized by** a matching circuit (34) for operatively interconnecting said transponder (32) with said antenna (36).

5. The RFID tag of claim 4, **characterized by** two connectors (58) each connector establishing an electrical connection between one output side of the antenna matching circuit (34) and a corresponding lobe (62) of said antenna (36).

6. The RFID tag of any of the preceding claims, **characterized in that** said tag housing (40) serves the dual function of mechanically containing and protecting said RFID transponder (32, 50) and of receiving and radiating RFID radio frequency signals between said RFID transponder and a suitable RFID tag reader unit.

7. The RFID tag of any of the preceding claims, **characterized in that** said tag housing (40) is of mechanically strong material for protecting said RFID transponder.

8. The RFID tag of any of the preceding claims, **characterized in that** said tag housing (40) is suitable for wear on a neck chain on the person of the tag user.

9. The RFID tag of any of the preceding claims, **characterized in that** said tag housing is a flat, thin tag assembly.

10. The RFID tag of any of the preceding claims, **characterized in that** said tag housing is 0.5 inch wide or wider, 1 inch long or longer, and 0.1 inch thick.

11. The RFID tag of any of the preceding claims, **characterized in that** a hole (70) is provided in said tag housing (40) for passing a neck chain, key chain or the like if the tag is to be hung and worn on the person of the tag user.

12. The RFID tag of any of the preceding claims, **characterized in that** said tag housing (40) is between 0.3 inches and 2 inches in width, between 0.5 inch and 3 inches in length and between 0.05 and 0.25 inch in thickness.

13. The RFID tag of any of preceding claims 10 or 12, **characterized in that** said tag dimensions are larger than and even double or triple the dimensions of said preceding claims.

## Patentansprüche

1. Ein RFID-Etikett (30), aufweisend ein Etikettengehäuse (40), das zumindest teilweise aus einem elektrisch leitfähigen Material ist, das geformt und eingerichtet ist, um eine Radiofrequenzantenne (36) zu definieren, die mit dem Gehäuse einstückig ist, und
einen in dem Etikettengehäuse enthaltenen RFID-Transponderschaltkreis (32, 50), der operativ mit der Antenne verbunden ist,
**dadurch gekennzeichnet, dass**
das Etikettengehäuse (40) mindestens einen elektrisch leitfähigen Gehäuseabschnitt (42, 44) aufweist, der zum Definieren der Antenne (36) geschlitzt ist.

2. Das RFID-Etikett gemäß Anspruch 1, **dadurch gekennzeichnet, dass** das Etikettengehäuse (40) aufweist:
einen oberen und einen unteren Gehäuseabschnitt (42, 44), die elektrisch und mechanisch miteinander verbunden sind, und
einen Schlitz (60), der in jeden der Abschnitte geschnitten ist, zum Definieren der Radiofrequenzantenne (36).

3. Das RFID-Etikett gemäß irgendeinem der vorhergehenden Ansprüche, **dadurch gekennzeichnet, dass** das Etikettengehäuse (40) aufweist: zwei Gehäuseabschnitte (42, 44), von denen mindestens einer elektrisch leitfähig ist und zum Definieren der Antenne (36) geformt ist, und einen elektrisch isolierenden Abstandshalter (48), der zwischen den Gehäuseabschnitten enthalten ist, wobei der RFID-Transponder (32, 50) an dem Abstandshalter abgestützt ist.

4. Das RFID-Etikett gemäß irgendeinem der vorhergehenden Ansprüche, **gekennzeichnet durch** einen Anpassungsschaltkreis (34) zum operativen Verbinden des Transponders (32) mit der Antenne (36).

5. Das RFID-Etikett gemäß Anspruch 4, **gekennzeichnet durch** zwei Anschlüsse (58), wobei jeder Anschluss eine elektrische Verbindung zwischen einer Ausgangsseite des Antennen-Anpassungsschaltkreises (34) und einer korrespondierenden Strahlungskeule (62) der Antenne herstellt.

6. Das RFID-Etikett gemäß irgendeinem der vorhergehenden Ansprüche, **dadurch gekennzeichnet, dass** das Etikettengehäuse (40) der doppelten Funktion des mechanischen Aufnehmens und Schützens des RFID-Transponders (32, 50) und des Empfangens und Ausstrahlens von RFID-Radiofrequenzsignalen zwischen dem RFID-Transponder und einer geeigneten RFID-Etikett-Lesereinheit dient.

7. Das RFID-Etikett gemäß irgendeinem der vorhergehenden Ansprüche, **dadurch gekennzeichnet, dass** das Etikettengehäuse (40) aus einem mechanisch starken Material zum Schützen des RFID-Transponders ist.

8. Das RFID-Etikett gemäß irgendeinem der vorhergehenden Ansprüche, **dadurch gekennzeichnet, dass** das Etikettengehäuse (40) zum Tragen an einer Halskette am Körper des Etikettenbenutzers geeignet ist.

9. Das RFID-Etikett gemäß irgendeinem der vorhergehenden Ansprüche, **dadurch gekennzeichnet, dass** das Etikettengehäuse eine flache, dünne Etikettenbaugruppe ist.

10. Das RFID-Etikett gemäß irgendeinem der vorhergehenden Ansprüche, **dadurch gekennzeichnet, dass** das Etikettengehäuse 0,5 Zoll breit oder breiter, 1 Zoll lang oder länger und 0,1 Zoll dick ist.

11. Das RFID-Etikett gemäß irgendeinem der vorhergehenden Ansprüche, **dadurch gekennzeichnet, dass** ein Loch (70) in dem Etikettengehäuse (40) vorgesehen ist, zum Durchführen einer Halskette, eines Schlüsselanhängers oder dergleichen, wenn das Etikett aufgehängt und am Körper des Etikettenbenutzers getragen werden soll.

12. Das RFID-Etikett gemäß irgendeinem der vorhergehenden Ansprüche, **dadurch gekennzeichnet, dass** das Etikettengehäuse (40) eine Breite von zwischen 0,3 Zoll und 2 Zoll, eine Länge von zwischen 0,5 Zoll und 3 Zoll und eine Dicke von zwischen 0,05 und 0,25 Zoll hat.

13. Das RFID-Etikett gemäß irgendeinem der vorhergehenden Ansprüche 10 oder 12, **dadurch gekennzeichnet, dass** die Etikettenabmessungen größer als oder sogar das Doppelte oder Dreifache der Abmessungen der vorhergehenden Ansprüche sind.

## Revendications

1. Une étiquette RFID (30) comportant un boîtier d'étiquette (40) au moins partiellement en matériau conducteur électriquement formé et configuré de façon à définir une antenne de radiofréquence (36) faite d'une seule pièce avec ledit boîtier, et
un circuit de transpondeur RFID (32, 50) compris dans ledit boîtier d'étiquette relié de manière opérationnelle à ladite antenne,
**caractérisée en ce que**
ledit boîtier d'étiquette (40) comporte au moins une partie de boîtier (42, 44) conductrice électriquement, fendue pour définir ladite antenne (36).

2. L'étiquette RFID selon la revendication 1, **caractérisée en ce que** ledit boîtier d'étiquette (40) comporte des parties de boîtier supérieure et inférieure (42, 44) assemblées électriquement et mécaniquement l'une avec l'autre, et une fente (60) coupée dans chacune desdites parties pour définir ladite antenne de radiofréquence (36).

3. L'étiquette RFID selon l'une quelconque des revendications précédentes, **caractérisée en ce que** ledit boîtier d'étiquette (40) a deux parties de boîtier (42, 44), au moins une de celles-ci étant conductrice électriquement et formée de manière à définir ladite antenne (36), et une entretoise (48) isolant électriquement, comprise entre lesdites parties de boîtier, ledit transpondeur RFID (32, 50) étant supporté sur ladite entretoise.

4. L'étiquette RFID selon l'une quelconque des revendications précédentes, **caractérisée par** un circuit d'adaptation (34) pour interconnecter de manière opérationnelle ledit transpondeur (32) avec ladite antenne (36).

5. L'étiquette RFID selon la revendication 4, **caractérisée par** deux connecteurs (58), chaque connecteur établissant une connexion électrique entre un côté de sortie du circuit d'adaptation d'antenne (34) et un lobe (62) correspondant de ladite antenne (36).

6. L'étiquette RFID selon l'une quelconque des revendications précédentes, **caractérisée en ce que** ledit boîtier d'étiquette (40) a la fonction double de comprendre mécaniquement et de protéger ledit transpondeur RFID (32, 50), et de recevoir et d'émettre des signaux de radiofréquence RFID entre ledit transpondeur RFID et une unité de lecture d'étiquette RFID appropriée.

7. L'étiquette RFID selon l'une quelconque des revendications précédentes, **caractérisée en ce que** ledit boîtier d'étiquette (40) est en matériau résistant mécaniquement afin de protéger ledit transpondeur RFID.

8. L'étiquette RFID selon l'une quelconque des revendications précédentes, **caractérisée en ce que** ledit boîtier d'étiquette (40) est apte à être porté à un collier sur le corps de l'utilisateur de l'étiquette.

9. L'étiquette RFID selon l'une quelconque des revendications précédentes, **caractérisée en ce que** ledit boîtier d'étiquette est un ensemble d'étiquette plat et fin.

10. L'étiquette RFID selon l'une quelconque des revendications précédentes, **caractérisée en ce que** ledit boîtier d'étiquette a une largeur de 0,5 pouce ou plus, une longueur de 1 pouce ou plus et une épaisseur de 0,1 pouce.

11. L'étiquette RFID selon l'une quelconque des revendications précédentes, **caractérisée en ce qu'**un trou (70) est prévu dans ledit boîtier d'étiquette (40) pour passer un collier, un porte-clés ou similaire, lorsque l'étiquette doit être accrochée et portée sur le corps de l'utilisateur de l'étiquette.

12. L'étiquette RFID selon l'une quelconque des revendications précédentes, **caractérisée en ce que** ledit boîtier d'étiquette (40) a une largeur entre 0,3 pouce et 2 pouces, une longueur entre 0,5 pouce et 3 pouces et une épaisseur entre 0,05 et 0,25 pouce.

13. L'étiquette RFID selon l'une quelconque des revendications précédentes 10 ou 12, **caractérisée en ce que** lesdites dimensions d'étiquette sont supérieures aux et même le double ou le triple des dimensions desdites revendications précédentes.
